Europäisches Patentamt

(19) European Patent Office

Office européen des brevets

(11) Publication number : **0 462 802 A1**

## (12) EUROPEAN PATENT APPLICATION

(21) Application number : 91305506.7

(22) Date of filing : 18.06.91

(51) Int. Cl.⁵ : **A41D 11/00, G09B 19/00**

(30) Priority : **19.06.90 US 540179**

(43) Date of publication of application :
**27.12.91 Bulletin 91/52**

(84) Designated Contracting States :
**DE FR GB IT**

(71) Applicant : **Ketch, Stephen Robert**
**1097 N.W. 81st Terrace**
**Plantation, Florida (US)**

(72) Inventor : **Ketch, Stephen Robert**
**1097 N.W. 81st Terrace**
**Plantation, Florida (US)**

(74) Representative : **Read, Matthew Charles et al**
**Venner Shipley & Co. 368 City Road**
**London EC1V 2QA (GB)**

(54) **Method and apparatus for teaching children how to fold clothes and other objects.**

(57)   The method and apparatus for teaching relatively young children how to fold articles of clothing and other objects is disclosed. The method and apparatus utilizes the placement of either matching pair of illustrations 3a, 3b of foldline illustrations on an article of clothing or other objects to be folded. By sequentially matching the paired illustrations, or folding along a foldline illustration, the article of clothing or other objects is properly folded.

EP 0 462 802 A1

FIG.1A

FIG.1B

## BACKGROUND AND OBJECTS OF THE INVENTION

### 1. Field of Invention

A method and apparatus for teaching relatively young children how to fold articles of clothing and other objects. The method and apparatus utilizes the placement of either matching pairs of illustrations or fold line illustrations on an article of clothing to be folded. By sequentially matching the paired illustrations, or folding along the fold line illustrations, the article of clothing or other object is properly folded.

### 2. Description of the Prior Art

Children of relatively young ages have great difficulty in learning how to properly fold clothes, sheets, and other objects. With younger children, efforts utilized in teaching the proper method of folding often become extremely frustrating for both children and parents. As a result, parents avoid teaching young children how to fold clothes while the task of folding becomes a chore without reward.

The complexity of folding is related to the fact that in order to properly fold a shirt, a pair of pants, or other object, various steps must be taken to properly fold different portions of the object on top of itself to arrive at a proper fold. To perform the proper folding steps children need to comprehend the geometry associated with each object as well as the proper placement of portions of the object on top of itself to arrive at a completed proper fold. These concepts are difficult for young children to comprehend and remember and are never considered an enjoyable or educational opportunity. Accordingly, parents often fold their childrens' clothes and other objects and defer teaching their children how to fold until later years.

Relatively young children do have certain skills that can be used to overcome these problems. Specifically, children of relatively young ages can recite the alphabet, count numbers, recognize patterns and pictures and assimilate various other similar concepts. Additionally, children enjoy participating in events where they can apply their newly learned skills to the world around them and often enjoy receiving an indication or reward for having completed a task properly. Finally, it has been found that children enjoy using their sense of touch, sound and sight in combination while learning, often responding quickly to such multisensory experiences. Nevertheless, these skills have not been applied to teaching children how to fold clothes or other objects.

Various attempts have been used to teach children how to dress. In particular, U.S. Patent No. 4,253,197 to Posta and U.S. Patent No. 3,775,775 to Mazzenga are generally directed to solving such efforts. Other attempts have been used to entertain or educate children by placing illustrations on garments. Specifically, U.S. Patent No., 3,724,101 to Slezak and U.S. Patent No. 4,710,979 to Poole et al.

None of the apparatuses or methods disclosed in the above-identified U.S. patents disclose a method or apparatus for teaching children how to properly fold clothes or other objects.

Therefore, the principal object of this invention is to provide a method and apparatus to teach children how to properly fold clothes or other objects.

Another object of this invention is to teach children how to properly fold clothes or other objects by sequentially matching pairs of illustrations.

Another object of this invention is to teach children how to properly fold clothes or other objects by sequentially folding same along fold line illustrations.

Another object of the invention is to provide a reward to children after completing a proper fold.

Another object of this invention is to teach children how to properly fold shirts, pants, skirts, sheets, pillow cases, and towels.

These highly desirable and unusual results are accomplished by the present invention of teaching children how to properly fold clothes and other objects.

Objects and advantages of the invention are set forth in part herein and in part will be readily appreciated here from, or may learned by practice with the invention, the same being realized and attained by means of instrumentalities and combinations pointed out in the appending specification and claims.

## SUMMARY OF THE INVENTION

The present invention is directed towards overcoming the problems associated with teaching young children how to fold clothes and other objects. By placing either matching pairs of illustrations or fold line illustrations at predetermined locations on an article of clothing or other object a child can learn how to properly fold by simply matching the appropriately placed illustrations in sequential order or by folding along the fold line illustrations in sequential order.

Additionally, by placing either the matching pairs of illustrations or fold line illustrations at various predetermined locations on an article of clothing or other object, different types of folds can be incorporated.

Additionally, by placing a reward illustration at a position where it would be visible upon completion of a proper fold the child can be rewarded for same.

By incorporating the above described concepts a child can learn how to properly fold clothes or other objects by using the skills he or she has already learned, namely alphabetical or numeral progressions and matching illustrations or fold line illustrations.

## BRIEF DESCRIPTION OF THE DRAWINGS

The accompanying drawings, referred to below and constituting a part of the invention disclosed, illustrate principals and preferred embodiments of the present invention, and together with the description serve to explain the principals of the invention, in which:

FIGS. 1A-1E are of a shirt incorporating the method and apparatus of the present invention for teaching a child a traditional shirt fold. The placement of illustrations on a shirt and the steps performed to match those illustrations in order to properly fold the shirt are shown.

FIGS. 2A-2E are similar drawings of a shirt incorporating the method and apparatus of the present invention to teach children an alternative type of simpler children's fold using matching pairs of illustrations.

FIGS. 3A-3C are similar drawings of a shirt incorporating the method and apparatus of the present invention to teach children a traditional shirt fold using fold line illustrations.

FIGS. 4A-4E are similar drawings of a shirt incorporating the method and apparatus of the present invention to teach children yet another type of shirt fold using matching pairs of illustrations.

FIGS. 5A-5C are of a pair of pants incorporating the method and apparatus of the present invention for teaching a child how to fold same by using matching pairs of illustrations.

FIGS. 6A-6C are of a skirt incorporating the method an apparatus of the present invention for teaching a child how to fold same by using a matching pair of illustrations.

FIGS. 7A-7E are of a square or rectangular cloth object incorporating the method and apparatus of the present invention for teaching a child how to fold towels, sheets, pillow cases or any other similar square or rectangular object by using matching pairs of illustrations.

## DETAILED DESCRIPTION OF THE PREFERRED ENBODIMENT

The present invention relates to a method and apparatus for teaching children how to fold clothes and other objects. By placing matching pairs of illustrations or fold line illustrations at predetermined locations on an article of clothing or other object a child can be taught how to fold by either matching the pairs of illustrations or folding along the fold line illustrations in sequential order.

Disclosed below are various preferred embodiments of the claimed invention. Although the methods and apparatuses disclosed in the figures and described herein are directed to shirts, pants, skirts, towels, sheets and pillow cases the claimed invention is not limited to same. As will be readily apparent to those skilled in the art, the present claimed invention can be applied to any item that requires folding. Additionally, the specific illustrations disclosed in the figures and described herein used for matching or identifying fold lines or indicating the proper fold sequence are for example purposes only and are not intended to limit the type of illustrations that can be used to practice the claimed invention. Also, as will be readily apparent to those skilled in the art, any type of pairs of matched illustrations or matching means incorporating some fold sequence indicating means can be used on the object to be folded in order to practice the claimed invention. Finally, the fold patterns indicated in the accompanying figures and described herein are symmetrical. Therefore, any reference to left-right orientation can be reversed and still yield the same fold pattern.

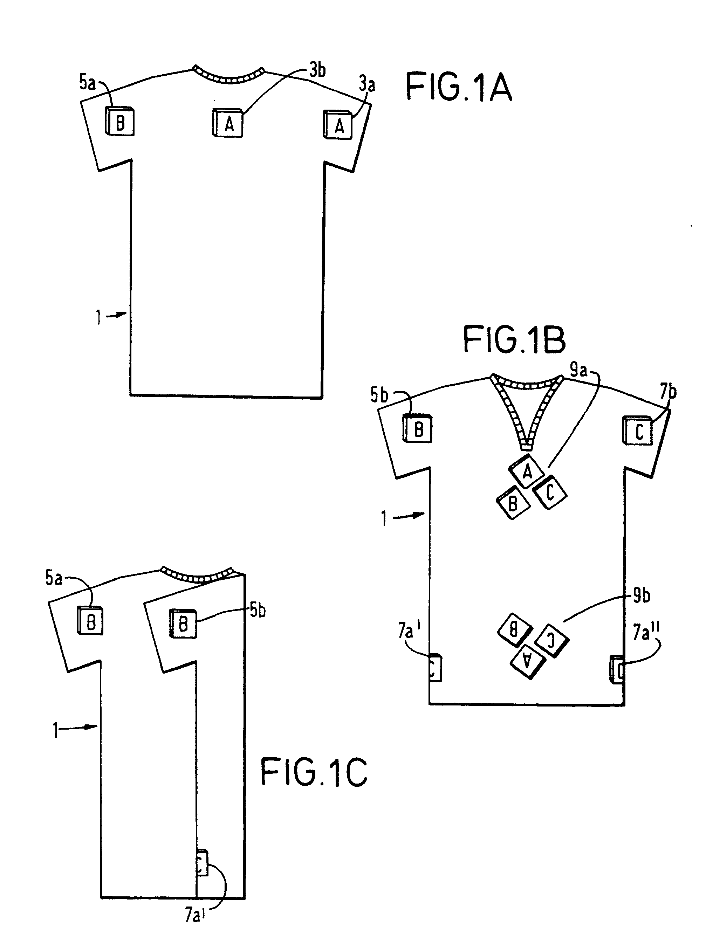

FIGS. 1A-1F show the method and apparatus of the present invention for teaching a child how to perform a traditional shirt fold.

FIG. 1A shows the back of shirt 1 having illustrations placed at predetermined locations. In the example shown in FIGS, 1A-1F, the illustrations used are blocks with letters of the alphabet indicated. Accordingly, the matching pairs of illustrations are alphabetical blocks having the same letter. The fold sequence indicating means is the alphabetic progression of those blocks, that is, match A, then B, then C.

Matching illustrations 3a and 3b, to be used for the first folding step, are placed on the back right-hand sleeve and on the back center of shirt 1 respectively as shown in FIG. 1A. Additionally, illustration 5a, to be used for the second folding step, is placed on the sleeve opposite illustration 3a, here, the back left-hand sleeve of shirt 1.

FIG. 1B shows the front of shirt 1 with additional illustrations placed at their proper predetermined locations for the particular fold disclosed. Specifically, illustration 5b is placed on the reverse side of the sleeve opposite illustration 5a, here on the front right-hand sleeve. Illustration 7b, to be used for the third folding step, is placed on the sleeve opposite illustration 5b, here the front left-hand sleeve. Also shown in FIG. 1B are partial illustrations 7a' and 7a" which, when aligned together after the completion of the second folding step, will form a complete illustration to be matched with illustration 7b. Finally, a reward illustration 9a is placed on the upper center portion of the shirt as shown. A reward illustration 9b can be optionally placed in upside-down orientation at the lower center portion on the front of shirt 1.

Once shirt 1 has been illustrated as shown in FIGS. 1A and 1B the operation of the method and apparatus to teach a child how to fold a shirt can be described. The child is first directed to place shirt 1 on its back as shown in FIG. 1A. The child is then taught to match illustrations 3a and 3b, letter "A" blocks, to perform the first fold. FIG. 1C shows the completed first fold with illustrations 3a and 3b matched but not visible.

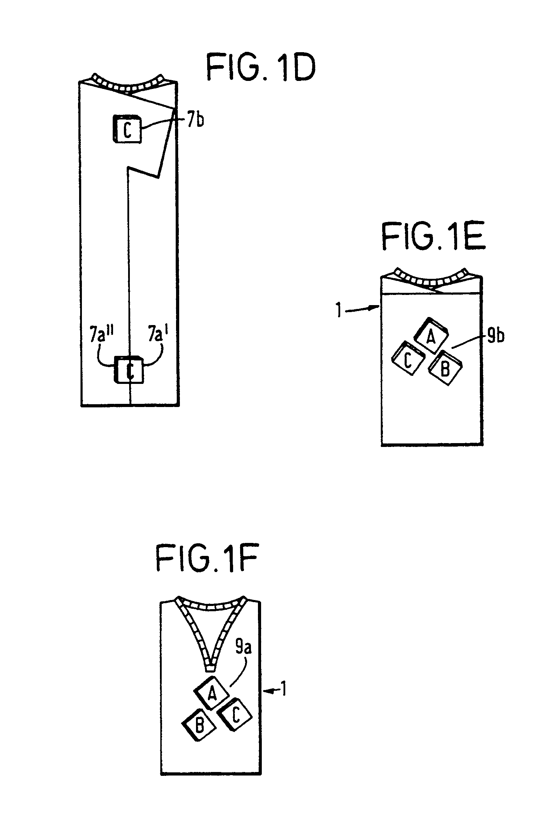

Once the first fold has been completed, illustration 5b, placed on the front right-hand sleeve, becomes visible to the child to perform the second-fold. The child is then taught to match illustrations 5a and 5b, letter "B" blocks, to perform the second fold. FIG. 1D shows the completed second fold with illustrations 5a and 5b matched but not visible.

Upon completion of the second fold, illustrations 7a' and 7a" become aligned and visible as a completed illustration, here a letter "C" block, to allow the child to perform the third fold. The child is then taught to match the completed illustration 7a' - 7a" with illustration 7b, letter "C" blocks, to perform the third and final fold. FIG. 1E shows the completed third fold. If the optional reward illustration 9b has been placed on shirt 1 as described previously, reward illustration 9b is now visible to the child indicating a completed proper fold. Alternatively, if reward illustration 9b is not used, the child is then directed to turn the folded shirt 1 over to the front, as shown in FIG. 1F, to see reward illustration 9a. By matching the matching pairs of illustrations in alphabetical order the child has learned to perform a traditional fold.

Generally, it is preferable to instruct the child to perform all vertical folds in a right-side onto left-side manner and to perform all horizontal folds in a bottom on to top manner. This consistent pattern of folding will speed the learning process.

The use of matching pairs of illustrations, here school blocks with letters placed on them, the child can easily remember how to perform each folding step. Additionally, by using a simple fold sequence indicating means, here the alphabetical sequence A, then B, then C, the child is able to learn the proper folding steps by following the alphabet. It is readily apparent to those skilled in the art that any type of illustration can be used as a matching means, e.g. matching horses, turtles, flowers, and the like, without departing from the scope of the claimed invention. Additionally, it is apparent that any kind of fold sequence indicating means can be used, e.g. the alphabet, numbers, groups of items, numbered arrows, and the like, to indicate the proper fold sequence without departing from the scope of the claimed invention.

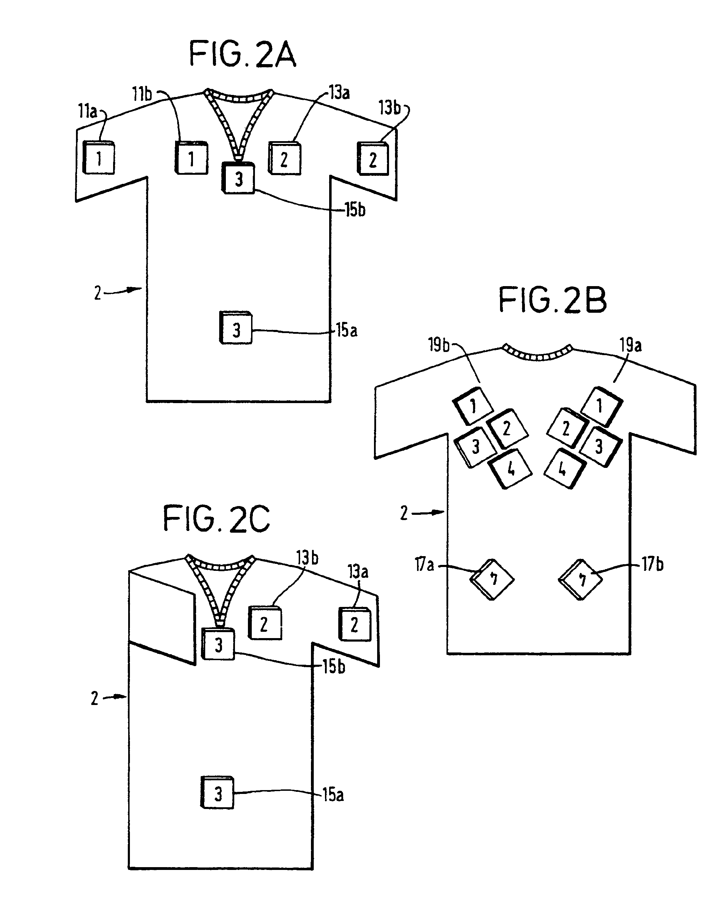

FIGS. 2A-2E show another form of the present invention wherein an easier shirt fold for children can be taught.

FIG. 2A shows the front of shirt 2 with matching pairs of illustrations placed thereon. Specifically, illustration 11a is placed on one sleeve, shown here as the right-hand sleeve, with matching illustration 11b placed on the upper right-hand portion of shirt 2. Illustration 13a is placed on the sleeve opposite to the sleeve with 11a, shown here as the left-hand sleeve, and illustration 13b is placed on the upper portion of the body of the shirt 2 as shown. Illustrations 15a and 15b are placed on the lower center and mid-center of shirt 2 respectively. The matching pairs of illustrations used for this example are again the same type of blocks used in FIGS 1A-1F. Here, though, the fold sequence indicating means is a numeric progression, that is 1, then 2, then 3.

FIG. 2B shows the back of shirt 2 with matching illustrations 17a and 17b located on the left-hand and right-hand sides of the lower portion of shirt 2. Both 17a and 17b can be optionally placed in an upside down orientation for proper viewing after the third fold. Reward illustrations 19a and 19b are placed on the upper right and left-hand shoulder portions respectively of shirt 2 as shown.

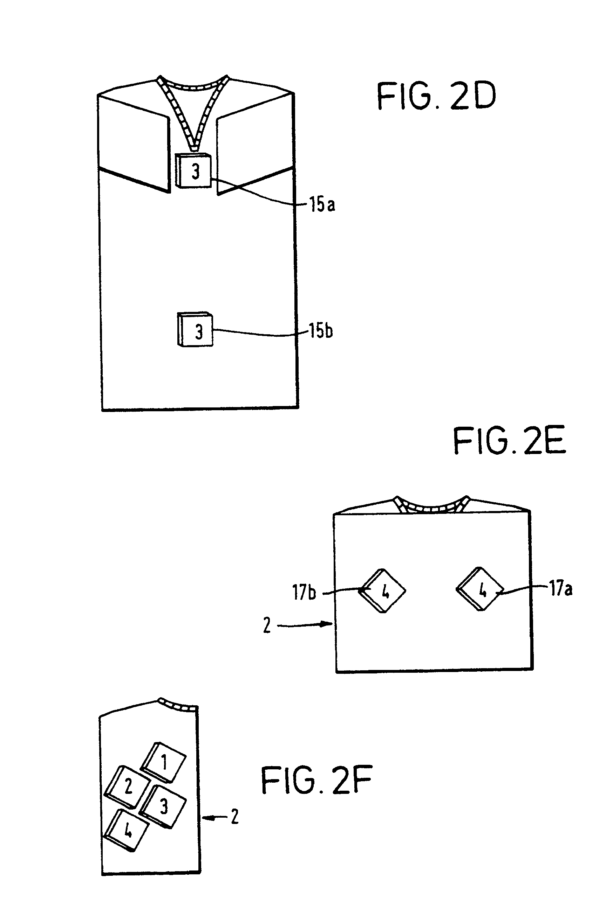

With the illustrations placed on the front and back of shirt 2, as shown in FIGS. 2A and 2B, the simple children's shirt fold can be described. First, the child is directed to place shirt 2 front-up with illustrations 11a and 11b et al. visible as shown in FIG. 2A. The child is then taught to match illustrations 11a and 11b, here number "1" blocks, to perform the first fold. FIG. 2C shows the completed first fold. The child is then taught to match illustrations 13a and 13b, here number "2" blocks, to perform the second fold as shown completed in FIG. 2D. The child is then taught to match illustrations 15a and 15b, here number "3" blocks, to perform the third fold. FIG. 2E shows the completed third fold. If illustrations 17a and 17b are originally placed in an upside down orientation, as shown in FIG. 2B, then completion of the third fold orientates 17a and 17b in a right-side up configuration for the forth fold. To perform the fourth and final fold the child is taught to match illustrations 17a and 17b, here number "4" blocks, in either a right 17a onto left 17b or a left 17b onto right 17a. FIG. 2F shows the completed fourth fold with right illustration 17a folded on top of left illustration 17b causing reward illustration 19a to become visible. Alternatively, folding 17b on top of 17a would cause reward illustration 19b to become visible.

Although this second folding technique has one additional fold compared to the traditional fold as shown in FIGS. 1A-1F, the fold demonstrated in FIGS. 2A-2F is simpler to learn. Generally, the simplicity of the fold is due to the fact that the fold is more symmetrical than the fold described in FIGS. 1A-1F. Again, the use of matching illustrations and a fold sequence indicating means allows children to quickly learn how to fold their clothes using the concept of matching with a simple numbered progression.

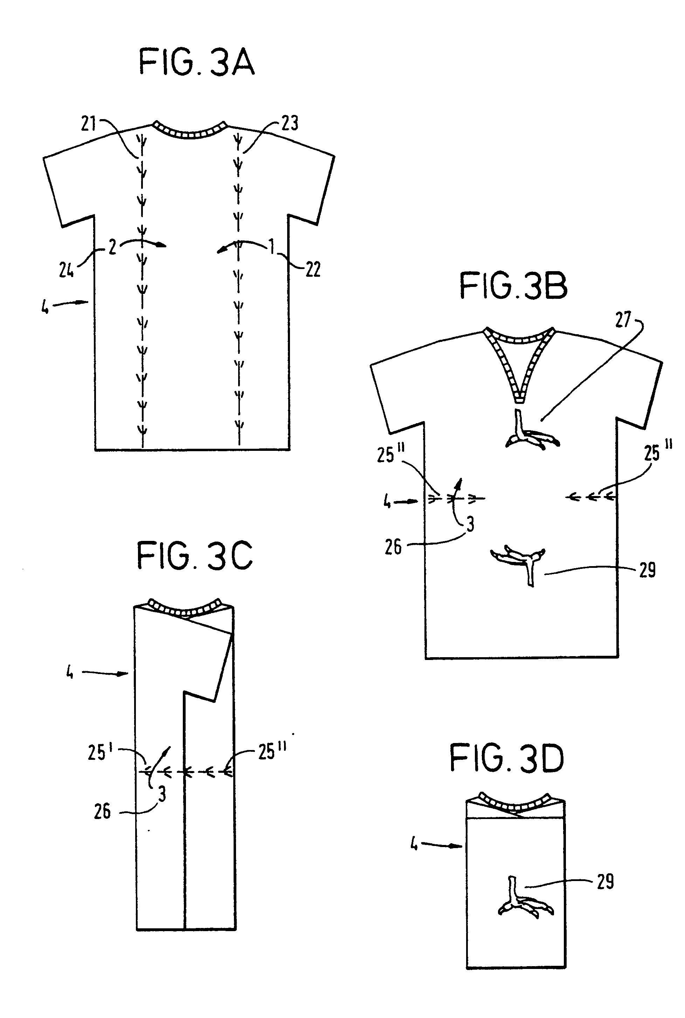

FIGS. 3A - 3D show the method and apparatus for teaching a child how to fold a shirt in a traditional fold by using fold line illustrations.

FIG. 3A shows the back of shirt 4 with fold line illustrations 21 and 23 running vertically down the back of shirt 4. Here, the fold line illustrations are foot prints. It is apparent to those skilled in the art that any type of illustration may be used to indicate a fold line, e.g., road lines, racing stripes, rope, and the like. Numbered arrow illustrations 22 and 24 serve as the fold sequence indicating means.

FIG. 3B shows the front of the shirt 4 with partial fold line illustrations 27' and 27" running horizontally across the front part of shirt 4. Additionally, numbered arrow illustration 26 is placed below partial fold line 25" so as to be visible upon completion of the second fold. Reward illustratiolns 27 and 29, here bird feet, are placed at the top and bottom centers of shirt 4.

Once fold line illustrations 21, 23, 25' and 25" along with numbered arrows 22, 24 and 26 are placed on the front and back of shirt 4 as shown in FIGS. 3A and 3B the method and apparatus for teaching a child the traditional fold using fold line illustrations can be described. By placing shirt 4 on its back as shown in FIG. 3A the child is directed to follow arrow illustration 22 to fold the left-hand sleeve along fold line illustration 23. The child is then directed to follow arrow illustration 24 to fold the right-hand sleeve along fold line illustration 21. FIG. 3C shows shirt 4 after completion of the first two folds. Once the first two folds are completed, partial horizontal fold line illustrations 25' and 25" meet to form a completed horizontal third fold line illustration. The child is then directed by arrow illustration 26 to fold shirt 4 along fold line illustration 25'-25" as shown in FIG. 3C. FIG. 3D shows the completed third fold with reward illustration 29 now visible.

By placing fold line illustrations on a shirt as described in FIGS. 3A-3D, a child can be taught how to perform a traditional shirt fold.

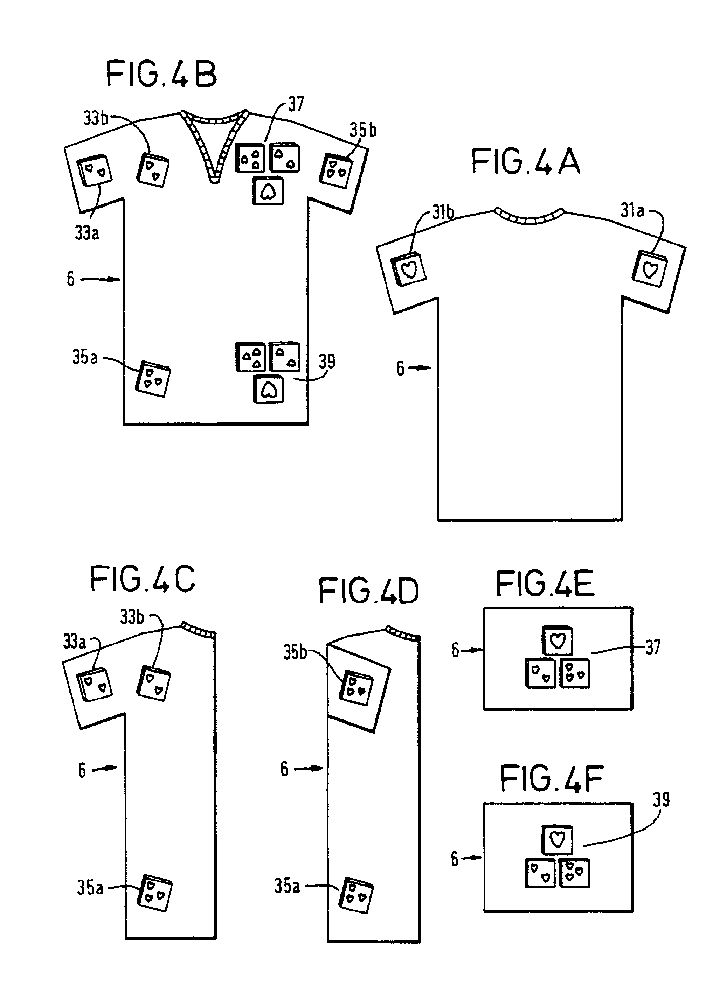

FIGS. 4A-4E show the method and apparatus of the present invention for a different shirt fold using matching illustrations.

FIG. 4A shows the back of shirt 6 with illustrations 31a and 31b placed on a sleeve as shown. Here, illustration 31a is placed on the right-hand sleeve and illustration 31b is placed on the left-hand sleeve.

FIG. 4B shows the front of shirt 6 with matching illustrations placed at the proper predetermined locations. Here, illustration 33a is placed on the right hand sleeve and matching illustration 33b is placed on the upper portion of shirt 6 to the right of shirt 1's vertical center line. Additionally, illustration 35a is placed on the lower portion of the shirt, again to the right of shirt 1's vertical center line. Matching illustration 35b is placed on the left-hand sleeve as shown. Finally, reward illustration 37 is placed on the upper portion of shirt 6 to the left of shirt 1's vertical center line and in an upside-down orientation. Additionally, a second reward illustration 39 is placed on the lower portion of shirt 6 to the left of shirt 1's vertical center line also in an upside-down orientation.

Here, the matching pairs of illustrations are school blocks. The fold sequence indicating means is the numeric progression of heart illustrations placed within the school blocks. Thus, the child is directed to match the blocks having one heart first, then to match the blocks having two blocks second, and so on until the fold is completed.

With shirt 6 illustrated as shown in FIGS. 4A and 4B, the folding steps can be described. First, the child is instructed to match illustration 31a with illustration 31b, school block illustrations having one heart, to perform the first fold. FIG. 4C shows the completed first fold. The child is then instructed to match illustration 33a with illustration 33b, school block illustrations having two hearts to perform the second fold. FIG. 4D shows the completed second fold. After completing the second fold, the child is directed to fold illustration 35a on top of illustration 35b, or alternatively illustration 35b on top of illustration 35a, to perform the third and final fold. If the child folds 35a on top of 35b he is rewarded with reward illustration 37, as shown in FIG. 4E. Alternatively, if the child folds illustration 35b on top of illustration 35a, the child is rewarded with reward illustration 39 as shown in FIG. 4F.

FIGS. 5A-5D show the method and apparatus of the present invention for teaching a child how to fold a pair of long pants.

FIG. 5A show the front of pants 8 with illustrations 41a and 41b placed at approximately the knee position.

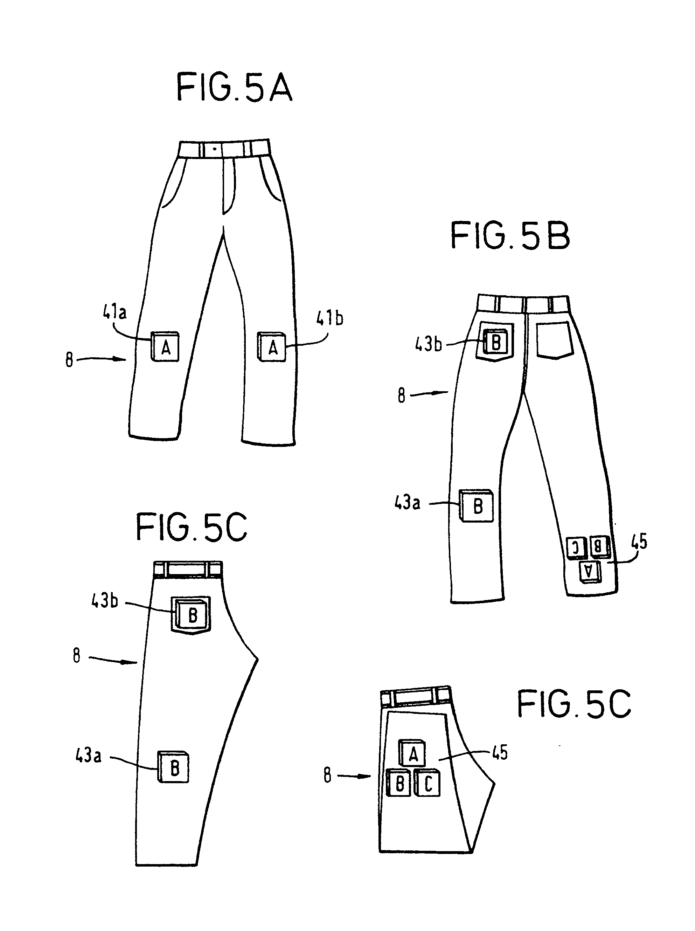

FIG. 5B shows the back of pants 8 with illustration 43a placed at the lower portion of a leg of pants 2, here shown on the lower left-hand pants leg. Illustration 43b is placed on the corresponding buttocks portion, shown here on the left-hand pocket. Finally, reward illustration 45 is placed on the lower portion of the leg opposite illustrations 43a and 43b, here the right-hand leg, in an upside down orientation as shown.

Once pants 2 are illustrated as shown in FIGS. 5A and 5B, the procedure for teaching a child how to fold a pair of long pants can be described. First, the child is taught to match illustration 41a with illustration 41b to perform the first fold. FIG. 5C shows the completed first fold. The child is then taught to match illustration 43a with illustration 43b to perform the second fold. FIG. 5D shows the completed second fold. Once the second fold is completed, the child can see reward illustration 45 indicating, that has completed the proper fold for pants 2 as shown in FIG. 5D.

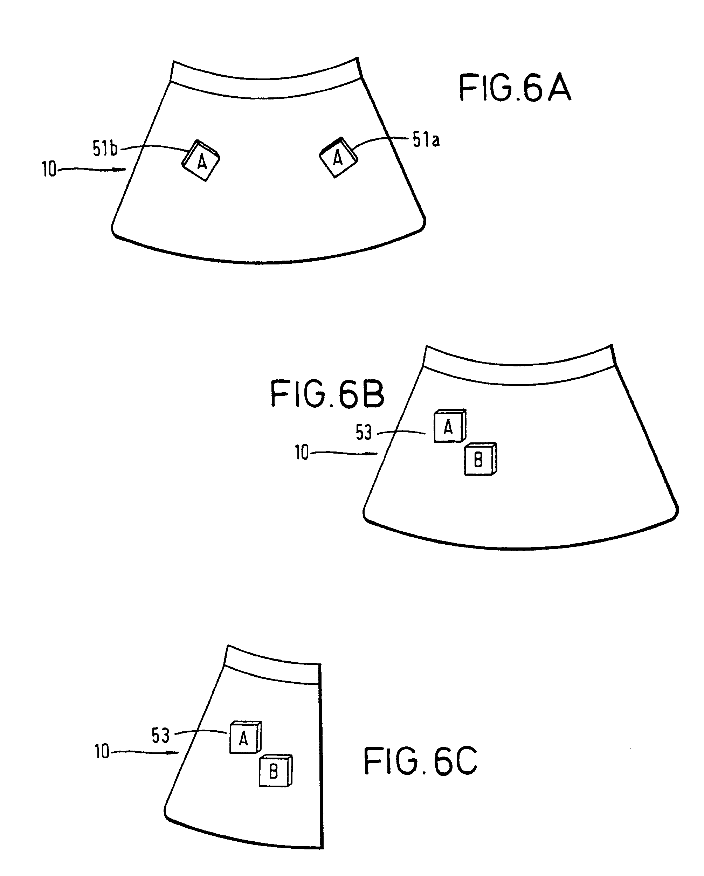

FIGS. 6A and 6B show a method and apparatus of the present invention for teaching a child how to fold a skirt.

FIG. 6A shows the proper placement of illustrations 51a and 51b. Specifically, 51a is placed on the front right-hand portion of skirt 10 and illustration 51b is placed on the front left-hand portion of same. FIG. 6B shows the back of skirt 10 having reward illustration 53 on the back left-hand side of skirt 10. Having illustrated skirt 10 as shown in FIGS. 6A and 6B, the method and apparatus for teaching a child how to fold a skirt can be described. Specifically, the child is taught to place skirt 10 in a position where illustrations 51a and 51b are visible. The child is then instructed to fold illustration 51a on top of illustration 51b to perform the fold. The completed fold is shown in FIG. 6C. Upon completion of the proper fold, the child is rewarded with reward illustration 53 as shown in FIG. 6C.

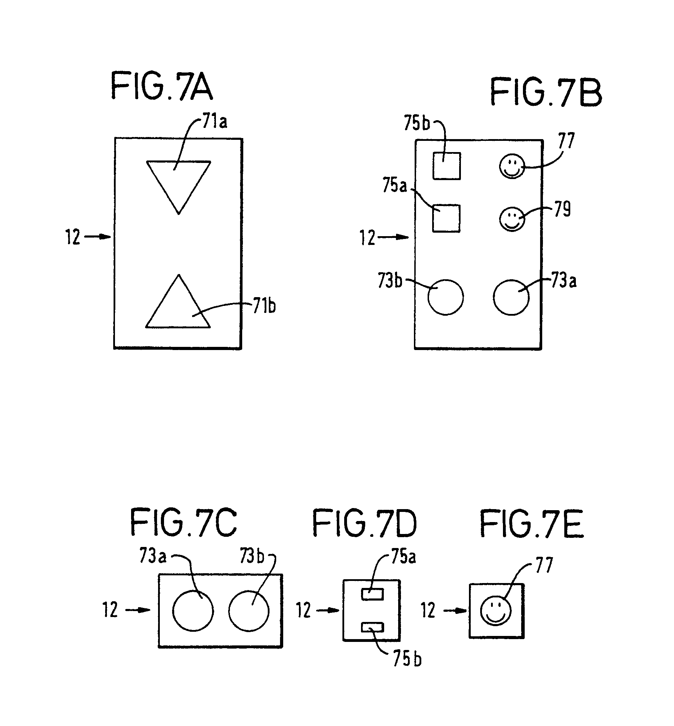

FIGS. 7A-7E show a method and apparatus of the present invention for teaching a child how to fold a towel, pillow case, sheets, blankets or any other square or rectangular article.

For this example, the square or rectangular article is described as being a towel.

FIG. 7A shows the front of towel 12 with illustrations 71a-71b. For this embodiment, the matching illustrations are geometric symbols. Illustration 71a is placed at the top half of towel 13 and illustration 71b is placed on the lower half of towel 12.

FIG. 7B shows the back of towel 12 with additional illustrations. The first pair of illustrations, 73a and 73b, here round circles, are placed on the lower half of towel 12 in a left-right orientation as shown. The second pair of illustrations 75a and 75b, here square blocks, are placed in the upper back left-hand quarter of towel 12. Finally, illustrations 77 and 79, smiling faced reward illustrations, are placed on the upper back right-hand quarter of towel 12 as shown.

As will be apparent to those skilled in the art certain objects, by their very geometry, do not require a fold sequence indicating means. The towel 12 is such an object. As shown below and in the accompanying figures, once towel 12 is orientated properly, only one pair of matching illustrations are visible at a given time removing any need for a fold sequence indicating means.

Once the illustrations are placed on towel 12 as shown in FIGS. 7A-7B the method and apparatus of the present invention to teach a child how to fold a towel can be described. The child is first told to place the towel face up as shown in FIG. 7A. The child is directed to match the triangular illustrations 71a and 71b to perform the first fold as shown completed in FIG. 7C.

The child is then directed to match the circle illustrations 73a and 73b to perform the second fold as shown completed in FIG. 7D.

Finally, the child is directed to fold the matching block illustrations 75a and 75b to perform the third and final fold as shown completed in FIG. 7E.

Once towel 12 has been folded properly the child is rewarded with reward illustration 77 or 79 as shown in FIG. 7E.

The use of the above-described method and apparatus for teaching children out to fold clothes can be applied to numerous objects which require folding without departing from the spirit of the invention.

The advantage of practicing the invention are apparent. Children have an opportunity to participate with their parents in taking care of their clothes while at the same time learn proper folding techniques without complication. Additionally, the technique is enchanced by the child receiving a reward for completing a proper fold.

The claimed invention also allows one to take advantage of new disappearing inks that are currently available on the market. These inks become visible when heated and gradually disappear as the ink and cloth cool. With such inks, one could imprint the various matching pairs of illustrations or fold line illustrations to thereby allow children to fold their clothes upon removing them from a dryer. After the article of clothing is properly folded, the cooling of the cloth and ink will cause the illustrations to gradually disappear yielding an article of clothing with no apparent illustrations.

Additionally, the matching pairs of illustrations and folding line illustrations can be ornamental in character allowing them to serve a dual purpose of teaching children how to properly fold their clothes while ornamenting various articles of clothing or other objects.

It will thus be seen that the objects set forth above, among those made apparent from the preceding description, are efficiently attained. Since certain changes may be made in the above method and apparatus without departing from the scope of the invention, it is intended that all matter contained in the above description and shown in the accompanying drawings shall be interpreted as illustrative and not limiting.

It is also understood that the following claims are intended to cover all of the generic and specific features of the invention described herein, and all statements of the scope of the invention which, as a matter of language, might be said to fall between.

## Claims

1. An apparatus for teaching children how to fold an object which comprises;
   at least one fold indicating means positioned on said object for indicating how to perform a fold.

2. An apparatus according to Claim 1 wherein said object is an article of clothing.

3. An apparatus according to Claim 2 wherein said, fold indicating means is a matching pair of illustrations placed on said article of clothing at a position that when said illustrations are matched together a fold is performed.

4. An apparatus according to Claim 3 wherein said matching pair of illustrations is a plurality of matching pairs of illustrations.

5. An apparatus according to Claim 4 wherein said plurality of matching pairs of illustrations have a fold sequence indicating means for indicating an order to match said plurality of matching pairs of illustrations.

6. An apparatus according to Claim 5 wherein said fold sequence indicating means is the alphabet.

7. An apparatus according to Claim 5 wherein said fold indicating means is a numeric progression.

8. An apparatus according to Claims 6 or 7 wherein said fold sequence indicating means is incorporated within said matching pairs of illustrations.

9. An apparatus according to Claim 2 wherein said fold indicating means is at least one fold line illustration placed on said article of clothing at a position that when said article of clothing is folded along said fold line illustration a fold is performed.

10. An apparatus according to Claim 9 wherein said fold line illustration is a plurality of fold line illustrations.

11. An apparatus according to Claim 10 wherein said plurality of fold line illustrations have a fold sequence indicating means for indicating an order to fold along said fold line illustrations.

12. An apparatus according to Claim 11 wherein said fold sequence indicating means comprises numbered arrows.

13. A method for teaching children how to fold an object which comprises;

placing a fold indicating means on said object,

and instructing a child to follow said fold indicating means.

14. A method according to Claim 13 wherein said object is an article of clothing.

15. A method according to Claim 14 wherein said fold indicating means is a matching pair of illustrations placed on said article of clothing at a position that when the child is instructed to match said illustrations a fold is performed.

16. A method according to Claim 14 wherein said fold indicating means is at least one fold line illustration placed on said article of clothing at a position that when said child is instructed to fold along said fold line illustration a fold is performed.

FIG.1A

FIG.1B

FIG.1C

FIG. 1D

7b

7a<sup>II</sup>    7a<sup>I</sup>

FIG.1E

1

9b

FIG.1F

9a

1

# FIG.2A

# FIG.2B

# FIG.2C

FIG. 2D

15a

15b

FIG. 2E

17b

17a

2

FIG. 2F

2

## FIG. 3A

## FIG. 3B

## FIG. 3C

## FIG. 3D

FIG.4B

FIG.4A

FIG.4C

FIG.4D

FIG.4E

FIG.4F

# FIG.5A

# FIG.5B

# FIG.5C

FIG.6A

51b — 51a

10

FIG.6B

53

10

FIG.6C

53

10

## FIG.7A

71a

12 →

71b

## FIG.7B

75b

75a

12 →

77

79

73b

73a

## FIG.7C

73a

73b

12 →

## FIG.7D

75a

12 →

75b

## FIG.7E

77

12 →

EP 0 462 802 A1

**European Patent Office**

# EUROPEAN SEARCH REPORT

EP 91 30 5506

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 253 197 (K. F. POSTA) <br> * the whole document * | 1,6,7,13 | A41D11/00 <br> G09B19/00 |
| A | CA-A-1 230 970 (RONN CHAIM J.) <br> * page 5 - page 9; claim 1; figures 1-6J * | 1,2 | |
| A,D | US-A-3 775 775 (A. MAZZENGA) | | |

**TECHNICAL FIELDS SEARCHED (Int. Cl.5)**

A41D
G09B
G09F

The present search report has been drawn up for all claims

| Place of search | Date of completion of the search | Examiner |
|---|---|---|
| THE HAGUE | 25 SEPTEMBER 1991 | GARNIER F.M.A.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

18